# EUROPEAN PATENT APPLICATION

(11) **EP 1 048 193 A1**
(43) Date of publication of application: **02.11.2000**
(21) Application number: 00303405.5
(22) Date of filing: 20.04.2000
(51) Int. Cl.: A01B 45/02

(54) **Rotatable scarifier unit**

(30) Priority: 29.04.1999 GB 9909905
(71) Applicant: David Michel, Manor Farm, Leeds, LS16 7AL (GB)
(72) Inventor: Ellul, John, Wedderburn, 3158 Victoria (AU); Michel, David, Adel Leeds LS16 7AL (GB); Oliver, Marcus, Adel Leeds LS16 7AL (GB)
(74) Representative: Orr, William McLean

(57) **Abstract**

A rotatable scarifier unit (13) for removing undesired material from a grass surface and which comprises; a drive shaft which extends substantially parallel to the surface being scarified; a series of scarifier blades (16) spaced apart along the length of the shaft and located in respective parallel planes extending substantially perpendicular to the ground surface; scarifier teeth (17) provided on the periphery of the blades (16) and operative, upon rotation of the unit (13), to penetrate the grass surface and to effect removal of undesired material from the grass surface; and fan elements (20) rotatable with the unit (13) in order to generate an airflow rotating around the shaft and thereby to assist in directing removed material rearwardly below the shaft and then upwardly and forwardly of the unit, said fan elements being formed by flaps attached to the sides of the blade.

## Description

This invention relates to a rotatable scarifier unit for use in removing undesired material from a grass surface and which comprises a series of planar scarifier plates or blades axially spaced apart from each other with respect to the axis of rotation of the unit (the axis usually extends generally parallel to the ground surface), and each plate having peripheral teeth which are capable of penetrating the grass surface in order to remove undesired material e.g. so-called "thatch" upon rotation of the unit.

A scarifier unit usually has a substantially horizontal drive shaft, and the scarifier plates or blades are spaced apart along the length of the shaft (each located in a substantially vertical plane), and upon rotation of the shaft the peripheral teeth of the plates penetrate the grass surface and engage dead grass, previously formed grass clippings or mowings, moss and other material (thatch), so as to remove this material. The unit then functions in similar manner to a cylinder type of lawnmower, whereby the removed material is thrown forwardly into a collecting box or other collection means.

This promotes the general health of the grass, and also allows a lawnmower to be used subsequently to cut the grass and create a sward of required high quality e.g. for "greens" on a golf course.

In known scarifier units, the rotation of the scarifier plates effects removal of the undesired material, and then rotates the removed material around the axis of the shaft before throwing the material forwardly into the collecting box. The removed material first moves rearwardly below the shaft, and is then guided upwardly and forwardly. A fixed curve guide is usually arranged rearwardly of the scarifier unit, and which assists in guiding the upward and forward movement of the removed material. The rotation of the blades of the scarifier unit applies a direct mechanical driving force to the removed material, and to a minor extent only the rotation of the teeth also induces a rotating airflow about the axis of the shaft which also helps in rotating the removed material around the shaft. However, the major part of the driving movement applied to the removed material is derived from mechanical engagement with the teeth of the scarifier plates or blades.

The invention therefore seeks to provide a rotatable scarifier unit having improved means to assist in the directing of removed material around the axis of rotation of the unit and forwardly e.g. to any suitable collection means.

According to one aspect of the invention there is provided a rotatable scarifier unit for removing undesired material from a grass surface and which comprises:
a drive shaft which in use extends substantially parallel to the surface being scarified;
a series of scarifier blades spaced apart along the length of the shaft and located in respective parallel planes extending substantially perpendicular to the ground surface;
scarifier teeth provided on the periphery of the blades and operative, upon rotation of the unit, to penetrate the grass surface and to effect removal of undesired material from the grass surface; and,
fan elements rotatable with the unit in order to generate an airflow rotating around the shaft and thereby to assist in directing removed material rearwardly below the shaft and then upwardly and forwardly of the unit, said fan elements being formed by flaps attached to the sides of the blades.

According to a further aspect of the invention there is provided a rotatable scarifier unit for removing undesired material from a grass surface and which comprises:
a drive shaft which in use extends substantially parallel to the surface being scarified;
a series of scarifier blades spaced apart along the length of the shaft and located in respective parallel planes extending substantially perpendicular to the ground surface;
scarifier teeth provided on the periphery of the blades and operative, upon rotation of the unit, to penetrate the grass surface and to effect removal of undesired material from the grass surface; and,
fan elements rotatable with the unit in order to generate an airflow rotating around the shaft and thereby to assist in directing removed material rearwardly below the shaft and then upwardly and forwardly of the unit, said fan elements being formed by bladed spacers separating at least some of the adjacent blades of the series of blades.

A scarifying unit of the invention is adapted to fit onto any suitable type of grass treatment machine, such as a greens triple mower, a five unit ride-on fairway mower, a set of tractor towed gang mowers, or a self-powered pedestrian machine.

Preferably, each blade is formed from a metal plate, and the peripheral teeth may be angled, somewhat in the manner of a circular saw, and preferably each tooth includes a hardened tip, to increase the service life. The tip could be a tungsten tip, welded, brazed or otherwise secured to the teeth of the blade.

Preferably, the unit has some form of universal mounting, to enable it to be readily adapted to mount on different types of mowing machine.

In the first aspect of the invention, the fan elements provided on the sides of the blades may be formed separately, and then subsequently attached to the blade sides. Alternatively, the fan elements may be formed from the metal of the blade, by suitable outward deformation of flap elements formed from the blade material.

Conveniently, the flap elements are generally rectangular in shape, and which are struck outwardly from the plane of the blade, and thereby leaving rectangular apertures formed in the blade. However, the deformation of the fan elements from the blade is such that the region of attachment of each fan element is the leading edge of the fan element, with respect to the intended direction of rotation of the blade, and therefore a rotating airflow is formed during rotation of the unit, which rotates about the axis of the shaft, and generally without inducing any airflow through the stamped out apertures formed in the plane of the blade to form the fan elements.

In the second aspect of the invention, the bladed spacers may comprise rotating vane type of spacers, effectively shaped like a paddle wheel, and these spacers serve the dual function of (a) separating adjacent blades by any required spacing axially of the shaft and (b) also generate an induced rotating airflow about the axis of the shaft in order to promote the rotation and forward projection of material removed from the grass surface by the scarifier unit.

A preferred embodiment of rotatable scarifier unit according to the invention will now be described in detail, by way of example only, with reference to the accompanying drawings, in which:
Figure 1 is a side view of a toothed blade or plate for use in a scarifier unit according to the invention;
Figure 2 is an end view of the blade shown in Figure 1, but showing only some of integral fan elements projecting laterally therefrom;
Figure 3 is a detail view of the formation of one of the fan elements out of the material from which the blade is formed; and,
Figure 4 is a schematic and perspective illustration of a typical scarifier unit to which the invention may be applied.

Referring first to Figure 4 of the drawings, this is a schematic illustration of a typical type of scarifier unit to which the invention may be applied. It is intended to be mounted on a lawnmower, or a separate grass treatment machine, and comprises a frame 10, a mounting portion 11 for mounting the unit on a grass treatment machine, a front roller 12, and a scarifier unit designated generally by reference 13, and which comprises a series of axially spaced scarifier blades arranged along the length of a drive shaft (not shown). A curved fixed guide plate 14 is arranged rearwardly of the scarifier unit 13, and which serves to guide scarified material upwardly and forwardly of the unit so as to be received by any suitable collection means e.g. a collecting box.

The scarifier unit 13 comprises a series of individual scarifier plates or blades 15, having peripheral scarifier teeth (not shown) which can penetrate the grass surface and effect removal of undesired material from the grass surf ace e.g. so-called "thatch", and then convey such material rearwardly below the drive shaft, and then upwardly and forwardly under the action of the guide plate 14.

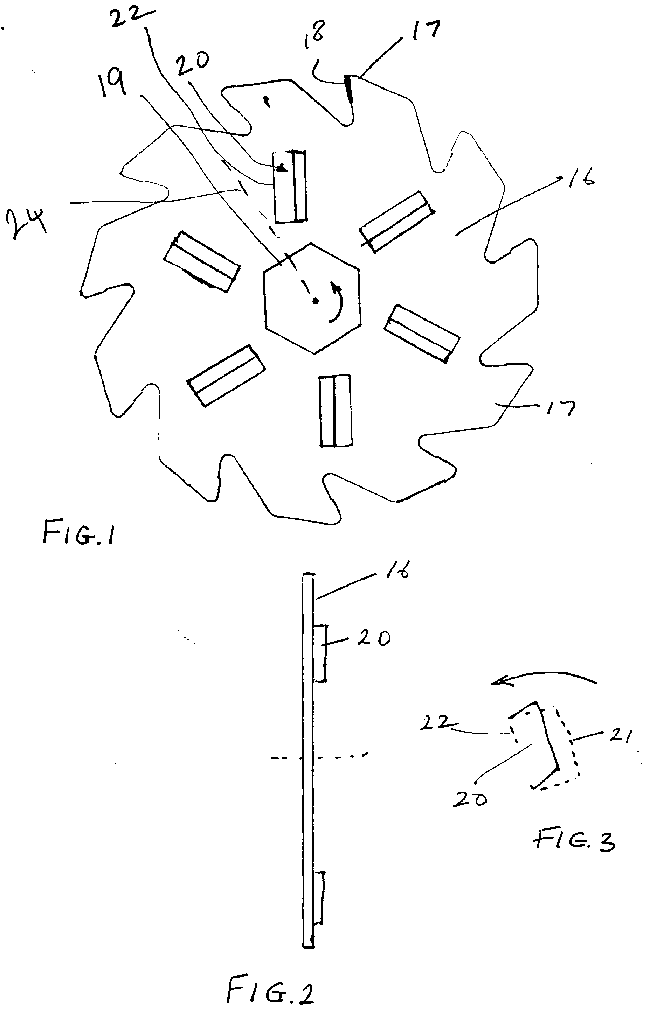

In order to assist the direction of the removed material rearwardly below the draft shaft, and then upwardly and forwardly of the unit, fan elements are provided which rotate with the unit in order to generate a rotating airflow around the drive shaft. One embodiment is shown in Figures 1 to 3 and which will now be described.

A scarifier plate 16 is shown, formed from metal plate, and having peripheral teeth 17 provided with hardened tips 18, e.g. tungsten hardened tips, and which penetrate the grass surface and then remove dead grass, previously mown clippings, moss etc, upon rotation of the plate 16.

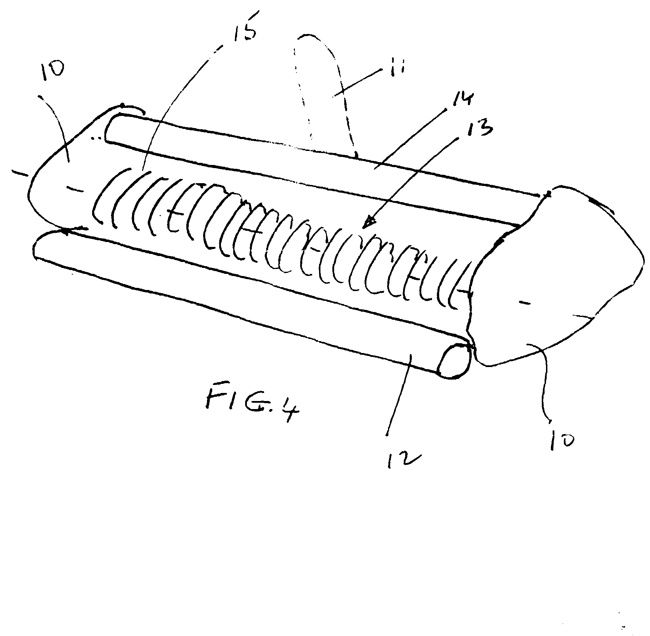

A stack or series of plates 16 is mounted at axial spacings from each other along the length of a drive shaft, via hexagonal or other hub portions 19 of each plate. A minimal rotating airflow will be formed by the rotation of the plate 16, by reason of the rotating teeth 17, but the embodiment shown in Figures 1 to 3 is provided with an additional fan effect, by provision of fan elements which rotate with the unit to generate a rotating airflow. In the embodiment of Figure 1, this takes the form of fan elements formed by flaps 20 which are attached to one side of the plate 16 (or to both sides if preferred), for the purposes of generating a rotating airflow. The flaps 20 are formed by partial stamping-out of the material of the plate 16, and outward deformation, as can be seen in Figures 2 and 3. Each flap 20 is generally rectangular, leaving a rectangular cutout shape 21 (shown in dotted lines in Figure 3) and rotation of the plate 16 in the direction of the arrow shown in Figure 1 (and also shown by arrow in Figure 3) generates a rotating airflow which assists in directing the movement of the removed thatch material first rearwardly below the drive shaft, and then upwardly and forwardly in co-operation with a suitable curved guide plate. This "fan assist", will be in addition to direct mechanical inter-engagement between the teeth 17 and the removed material during rotation of the unit.

It should be particularly noted from Figure 1 and Figure 3 that the leading edge 22 of each flap 20 comprises the forward edge of the flap, with respect to the direction of rotation. This means that, during rotation of each blade 16, although cutout apertures 21 are formed out of the plate 16 during the formation of the flaps 20, airflow generated will not tend to "leak" through these apertures, but will form a rotating airflow around the axis of the shaft, to promote required movement of the "thatch" material removed by the teeth 17 from the grass surface.

It will also be noted from Figure 1 that the leading edge 22 of each flap 20 maybe rearwardly inclined with respect to a radial line (shown by dashed line 24 in Figure 1), and this has been found also to have an advantageous effect in the generation of a suitable rotating airflow.

It should be understood that the integrally formed flaps 20 shown in Figure 1 to 3 are just one means of providing improved "fan effect" to promote required movement of thatch material to be collected forwardly of the unit. Other arrangements of flap elements could be formed on one or both sides of the plates 16, i.e. separately formed flap elements subsequently welded or brazed in position.

In addition, in a further embodiment (not shown), the necessary fan elements may be formed by bladed spacers separating at least some of the adjacent blades of the series of blades. These spacers may take the form of rotating "paddles", and which have the dual function of (a) separating the blades by required axial spacing and (b) generating required rotating airflow around the shaft during rotation of the unit.

## Claims

1. A rotatable scarifier unit (13) for removing undesired material from a grass surface and which comprises:
a drive shaft which in use extends substantially parallel to the surface being scarified;
a series of scarifier blades (16) spaced apart along the length of the shaft and located in respective parallel planes extending substantially perpendicular to the ground surface;
scarifier teeth (17) provided on the periphery of the blades (16) and operative, upon rotation of the unit (13), to penetrate the grass surface and to effect removal of undesired material from the grass surface; and
fan elements (20) rotatable with the unit (13) in order to generate an air flow rotating around the shaft and thereby to assist in directing removed material rearwardly below the shaft and then upwardly and forwardly of the unit, said fan elements being formed by flaps (22) attached to the sides of the blades (16).

2. A rotatable scarifier unit (13) for removing undesired material from a grass surface and which comprises:
a drive shaft which in use extends substantially parallel to the surface being scarified;
a series of scarifier blades (16) spaced apart along the length of the shaft and located in respective parallel planes extending substantially perpendicular to the ground surface;
scarifier teeth (17) provided on the periphery of the blades (16) and operative, upon rotation of the unit (13), to penetrate the grass surface and to effect removal of undesired material from the grass surface; and
fan elements rotatable with the unit (13) in order to generate an air flow rotating around the shaft and thereby to assist in directing removed material rearwardly below the shaft and then upwardly and forwardly of the unit, said fan elements being formed by bladed spacers separating at least some of the adjacent blades (16) of the series of blades.

3. A scarifier unit according to claim 1 or 2, and adapted to fit on a grass treatment machine.

4. A scarifier unit according to any one of claims 1 to 3, in which each blade (16) is formed from a metal plate (16), and the peripheral teeth (17) are angled in the manner of a circular saw.

5. A scarifier unit according to claim 4, in which each of the peripheral teeth (17) includes a hardened tip, to increase service life.

6. A scarifier unit according to claim 5, in which the tip is a tungsten tip which is welded, brazed, or otherwise secured to the respective tooth (17) of the blade (16).

7. A scarifier unit according to any one of the preceding claims, and having a universal mounting, to enable the unit to be mounted on different types of mowing machine.

8. A scarifier unit according to claim 1, in which the fan elements (22) provided on the side of the blade (16) are formed separately, and then subsequently attached to the blade side.

9. A scarifier unit according to claim 1, in which the fan elements (20) are formed from the metal of the blade (16), by outward deformation of flap elements formed from the blade material.

10. A scarifier unit according to claim 9, in which the flap elements are generally rectangular in shape, and which are struck outwardly from the plane of the blade, and thereby leaving rectangular apertures (21) formed in the blade (16).

11. A scarifier unit according to claim 10, in which the deformation of the fan elements from the blade (16) is such that the region of attachment of each fan element to the blade is the leading edge (22) of the fan element, with respect to the intended direction of rotation of the blade.

12. A scarifier unit according to claim 2, in which the bladed spacers comprise rotating vane type of spacers, effectively shaped like a paddle wheel, and such spacers serving the dual function of (a) separating adjacent blades by any required spacing axially of the shaft and (b) also generating an induced rotating air flow about the axis of the shaft in order to promote the rotation and forward projection of material removed from the grass surface by the scarifier unit.
